# EUROPEAN PATENT APPLICATION

(11) **EP 1 463 051 A2**
(43) Date of publication of application: **29.09.2004**
(21) Application number: 04006972.6
(22) Date of filing: 23.03.2004
(51) Int. Cl.: G11B 17/04

(54) **Disc tray of a disc device**

(30) Priority: 28.03.2003 JP 2003090750
(71) Applicant: ORION ELECTRIC CO., Ltd., Takefu-City, Fukui 915-8555 (JP)
(72) Inventor: Hara, Hirotoshi, Takefu-shi Fukui 915-8555 (JP)
(74) Representative: VOSSIUS & PARTNER

(57) **Abstract**

In order to permit a disc (9) to be laid easily on a disc tray (1) in a disc device movable along guide rails fitted into the disc device and having a circular recess (3) made on its upper surface (17) even though the tray is not fully pulled out from the cabinet (10), the circular recess (3) has a disc-bearing surface (5) on which a disc is to be laid, and the disc-bearing surface (5) has a recess (13, 14 or 16) on its rear side, thereby permitting a disc (9) to be inclined and inserted deep into the space between the front overhung of the cabinet (10) and the unexposed area of the disc-bearing surface (5) while holding the disc in the most stable way with the first finger inserted in the center hole and with the thumb applied to the circumference of the disc (Fig.1).

## Description

The present invention relates to a disc tray in a disc device movable along guide rails fitted to the disc device. Such a disc tray is designed to facilitate the laying and removing of a disc from the disc-bearing surface of the disc tray.

The disc device functions to record or reproduce sound and/or picture information from a CD or DVD, which is laid on the turntable of the device in reproducing and recording such information. There are various methods of carrying and putting the disc on the turntable. In one representative loading method, the disc is laid on a movable disc tray, which can move back and forth for loading and unloading a disc from the disc device. In another representative loading method, the disc is pushed into the disc slot, and then the disc is automatically pulled in the cabinet of the device to be carried to a predetermined position where the disc is laid on the turntable.

The disc tray according to the present invention is designed to be used in a disc device where the disc drive works according to the former representative loading method. Specifically the disc tray is operatively connected to a rack- and-gear mechanism, which can be driven by an associated motor so as to move the disc tray along an opposite guide rails. A disc can be laid or removed from the disc tray when the disc tray is pushed out of the cabinet. After the disc is laid on the disc tray, the disc-bearing tray is pushed in the cabinet. In reproducing information from the disc, the traverse unit is raised to push up the disc away from the disc tray, and then the disc is clamped onto the turntable, which turns at a high speed to reproduce information from the disc with an associated photo-pickup.

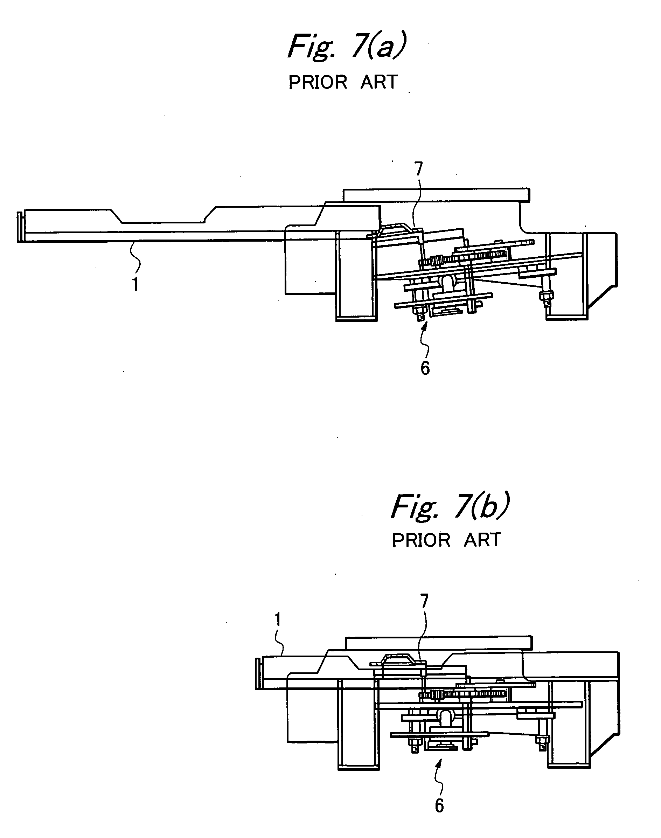

Fig.7(a) shows the disc tray drive of a conventional disc device with the disc tray pulled out ("opening" position), whereas Fig.7(b) shows the disc tray drive with the disc tray withdrawn ("closed" position). In the opening position the disc tray 1 fully comes out of the cabinet so that its circular recess, which is large enough to accommodate the disc, may appear altogether.

JP-A 7-254199 discloses a "Disc Device" whose disc tray is so narrow that the disc may partly project from the opposite longitudinal sides of the disc tray. The disc can be easily removed from the disc tray by picking the projecting part up with fingers. The disc is accessible from either side of the disc tray. This arrangement permits reduction of the lateral size or width of the disc tray, although its longitudinal size cannot be reduced.

Also, JP-A 10-255364 discloses a "Disc Reproducing and/or Recording Device" whose disc tray is so designed to project from the front panel in inclined form so that the projected horizontal length can be shortened. The front panel door is hinged at its opposite lower parts to the cabinet of the disc reproducing and/or recording device to open and close the front opening of the cabinet; the disc tray is movably connected on the front end to the front panel door, and is movably fitted on its opposite sides in the guide slots, which are made in the opposite side walls of the cabinet, so that the disc tray move back and force when the front panel door is closed and opened; and the disc tray is responsive to the opening of the front panel door for coming out of the front opening and descending down to a predetermined level lower than the level of the guide slots. This arrangement is complicated in structure, and accordingly the manufacturing cost is high.

JP-U 04-12148 discloses a "Disc Tray" having its front part hinged to the rest of the tray, thus permitting the front part to bend and droop down when the tray is pulled out of the cabinet. Thus, the disc can be easily removed from the disc tray by holding the projecting area of the disc with two fingers. However, when the disc tray is withdrawn, the front part of the tray drooped down must be raised to be coplanar with the rest of the tray. This is somewhat inconvenient.

In putting a disc on the tray or in taking it off from the tray, the disc can be better held by inserting the first finger in the center hole of the disc and by applying the thumb to the circumference of the disc than by pinching the circumference of the disc with two fingers.

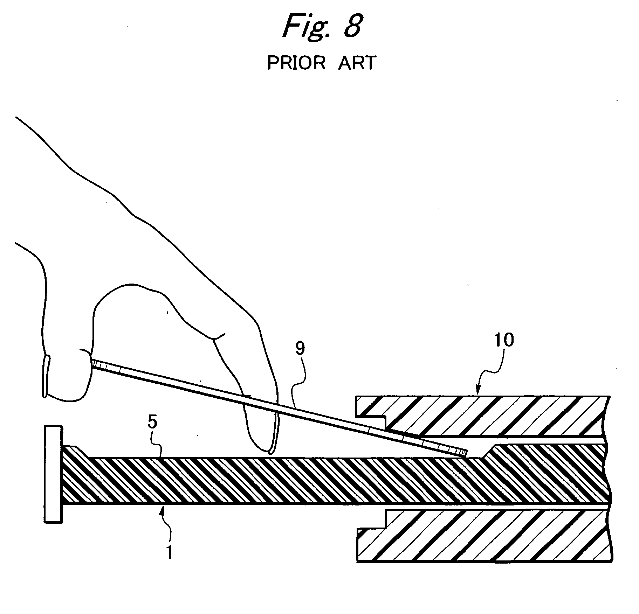

Fig.8 shows how the disc can be laid on a conventional disc tray, which is not fully drawn from the cabinet. As seen from the drawing, the disc is held by inserting the first finger in the center hole of the disc and by applying the thumb to the circumference of the disc. The disc tray is not pulled out to its full length, and therefore, the disc is caught by the overhang of the front of the ceiling plate of the cabinet, thereby preventing the disc from lying on the tray so long as the disc is held by inserting the first finger in the center hole and by applying the thumb to the circumference of the disc.

In view of the above one object of the present invention is to provide a disc tray structure which permits a disc to be laid on the tray even though the tray is not fully pulled out from the cabinet while the disc is held in the most stable way, that is, by inserting the first finger in the center hole and by applying the thumb to the circumference of the disc.

To attain this object a disc tray in a disc device movable along guide rails fitted into the disc device and having a circular recess made on its upper surface, is improved according to the present invention in that the circular recess has a disc-bearing surface on which a disc is to be laid, and the disc-bearing surface has a recess on its rear side.

The recess of the disc-bearing surface may be a slope inclining down toward the rear end of the disc-bearing surface.

Furthermore, the recess of the disc-bearing surface may have a through-hole therein.

The disc tray can be moved back and forth by an associated rack-and-pinion mechanism, via which the motor transmits its power to the disc tray. The disc tray in the state of being not fully pushed out of the cabinet, still permits the user to incline and lay a disc on the disc tray with his thumb applied the circumference of the disc and with his first finger inserted in the center hole of the disc.

The disc tray is rectangular, and it has the circular recess including the disc-bearing surface as mentioned above and an opening made therein. The opening is large enough to allow a turntable to get in and a photo-pickup to move. The disc-bearing surface is not flat but has a recess on its rear side as mentioned above, so that the rear part of the disc-bearing surface next to the rear end of the disc tray is set deep below the rest of the disc-bearing surface. These arrangements effectively prevent the inclined disc from being caught by the overhang of the front of the cabinet, assuring that the disc is laid on the disc tray while holding the disc with his thumb applied to the circumference of the disc and with his first finger inserted in the center hole of the disc.

Other objects and advantages of the present invention will be understood from some preferred embodiments of the present invention, which are shown in the accompanying drawings.
Fig.1 is a perspective view of a disc tray partly appearing from the tray slot of the front panel;
Fig.2 is a perspective view of a disc tray according to a first embodiment of the present invention;
Fig.3 illustrates how a disc can be laid on the disc tray of Fig.2;
Fig.4 illustrates how a disc can be laid on a disc tray according to a second embodiment of the present invention;
Fig.5 illustrates how a disc can be laid on a disc tray according to a third embodiment of the present invention;
Fig.6 illustrates how a disc can be laid on a disc tray according to a fourth embodiment of the present invention;
Fig.7(a) is a longitudinal section illustrating a disc tray in the state of appearing from the cabinet of a conventional disc device, whereas Fig.7(b) is a longitudinal section illustrating the disc tray in the state of withdrawing in the cabinet; and
Fig.8 illustrates how a disc can be laid on a conventional disc tray.

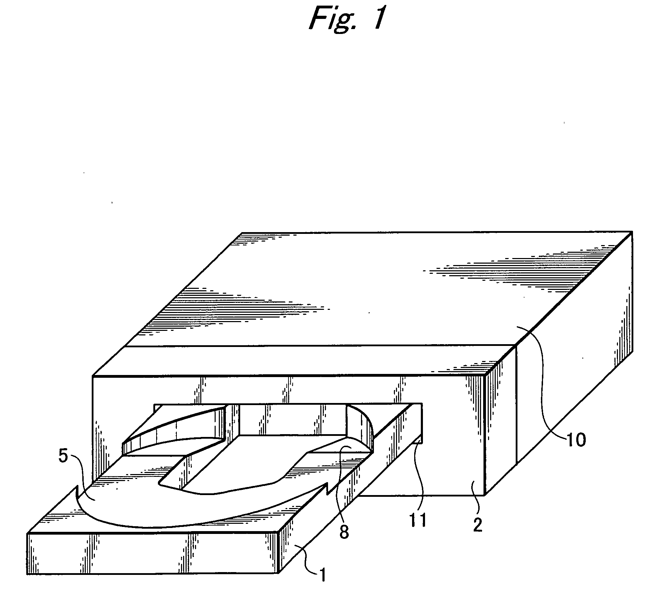

Referring to Fig.1, a disc device has a disc tray 1 movable along associated opposite guide rails in its cabinet. The disc tray 1 appears from the tray slot 11 of the front panel 2. The disc tray 1 has a rack fixed to its bottom, and a rotary pinion is engaged with the rack. When the rotary pinion is rotated by an associated motor, the disc tray 1 is moved back and forth.

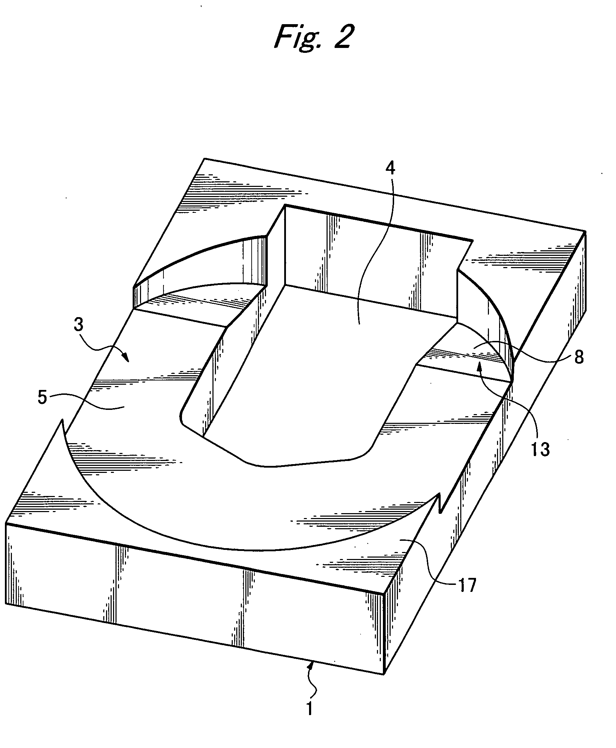

Referring to Fig.2, a disc tray 1 according to the first embodiment of the present invention is rectangular, and has a circular recess 3 made on its upper surface 17. Also, it has a through-hole 4 made in the middle. The circular recess 3 provides a disc-bearing surface 5 on which a disc is to be laid. As seen from Fig.7(b), when the disc tray 1 is withdrawn in the cabinet, the turntable 7 of the traverse unit 6 is raised to get in the through-hole 4, and the photo-pickup can be moved in the through-hole 4. When the turntable is raised, the disc gets on the rising turntable, and then the disc is pushed against the turntable by the clamper to be fixedly held there.

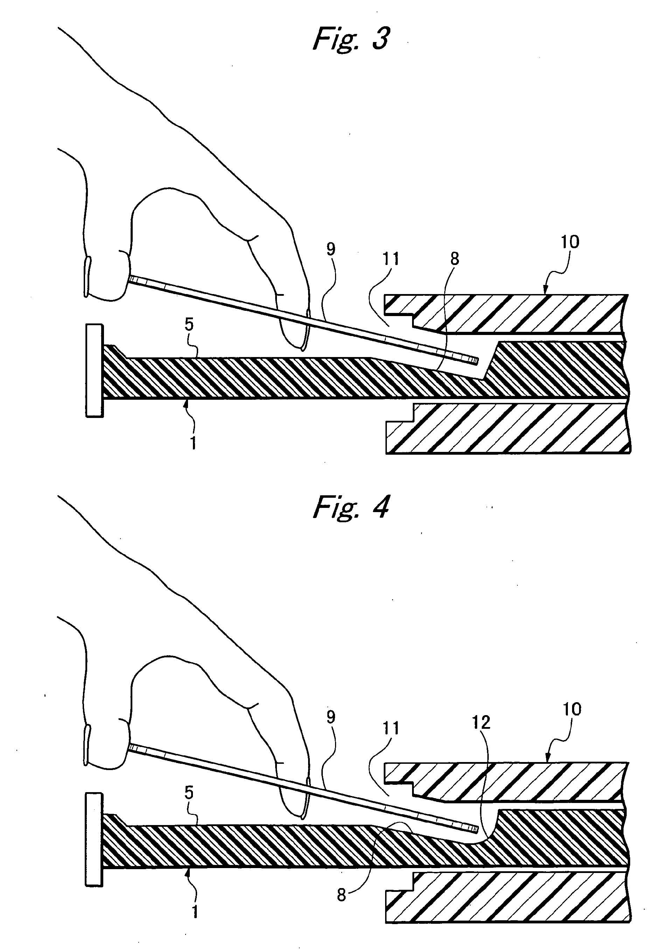

The disc tray 1 has a slope 13 on its rear side, so that the disc-bearing surface 5 is inclined down towards the rear end of the disc tray 1. The slope 13 defines an inclined surface 8. Fig.3 shows how a disc 9 is laid on the disc tray 1; the drawing is prepared to be similar to Fig.8 in order to facilitate comparison with the conventional disc tray. As is apparent from Fig.3, the disc 9 can be laid on the disc tray 1 without being caught by the overhung laterally across the disc slot 11 of the cabinet 10. The disc 9 is held with the first finger inserted in the center hole of the disc, and with the thumb applied to the disc circumference. The disc 9 is inclined relative to the exposed area of the disc tray 1 with its forward end low, and the inclined disc 9 is inserted in the space between the front overhang of the ceiling plate and the unexposed area of the disc tray 1, and finally the disc 9 falls flat on its back on the disc-bearing surface 5. As may be understood from the above, the disc 9 can be laid on and taken off from the disc tray 1 without the necessity of pushing the disc tray 9 fully out of the tray slot 11. It suffices that the disc tray 1 appears from the tray slot 11 with the slope 13 remaining in the cabinet 10.

Fig.4 shows a disc tray according to the second embodiment of the present invention, which is different from the first embodiment only in that the slope 13 is consecutive to a curved riser 12. The disc 9 is held with the first finger inserted in the center hole of the disc, and with the thumb applied to the disc circumference. The disc 9 is inclined relative to the exposed area of the disc tray with its forward end low, and the inclined disc 9 is inserted in the space between the front overhang of the ceiling plate of the cabinet 10 and the unexposed area of the disc tray 1, and finally the disc 9 falls flat on its back on the disc-bearing surface 5.

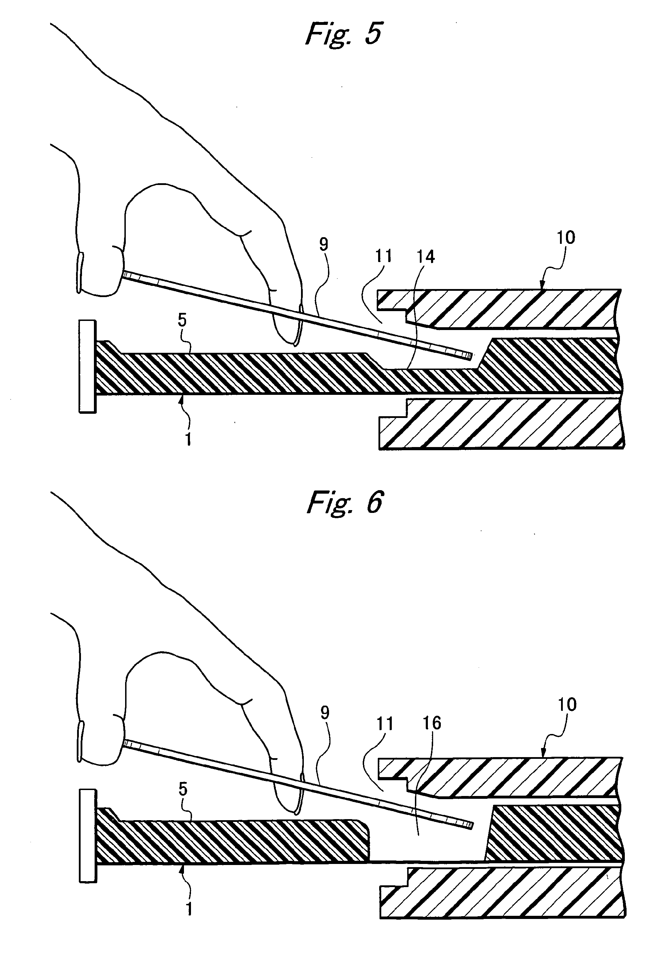

Fig.5 shows a disc tray according to the third embodiment of the present invention, which is different from the first or second embodiment in that in place of the slope 13 made is a recess 14, so that the rear part of the disc-bearing surface 5 next to the rear end of the disc tray 1 is set deep below the exposed area of the disc-bearing surface 5. The disc 9 is kept inclined with its forward end low, and the inclined disc 9 is inserted in the space between the front overhang and the unexposed area of the disc tray, and finally the disc 9 can be laid on the disc-bearing surface 5. That is, the disc 9 can be laid on the disc tray 1 without contact of the forward end of the disc with flat surface of the disc-bearing surface 5, and also without contacting being caught by the front overhang of the disc slot.

Fig.6 shows a disc tray 1 according to the fourth embodiment of the present invention, which has a through-hole 16 made on the rear side of the disc-bearing surface 5. As shown in the drawing, the disc 9 is kept inclined with its forward end low, and the inclined disc 9 is inserted in the space between the front overhang and the unexposed area of the disc tray without being caught by the front overhang, and finally the disc 9 falls flat on its back on the disc-bearing surface 5.

As may be understood from the above the disc tray is so constructed that it may have a recess, slope, or through hole made on its rear side of the disc-bearing surface, thereby permitting a disc to be inclined and inserted deep into the space between the front overhung and the unexposed area of the disc-bearing surface while holding the disc in the most stable way with the first finger inserted in the center hole and with the thumb applied to the circumference of the disc.

This arrangement permits a disc to be laid on the disc-bearing surface of the "not-fully-pulled-out" disc tray without being caught by the front overhang of the cabinet. Thus, substantial reduction of the longitudinal length of the disc drive can be attained without losing the benefit of holding a disc in the most stable way. This contributes to the saving of material and the shortening of the loading and unloading time.

## Claims

1. A disc tray (1) in a disc device movable along guide rails fitted into the disc device and having a circular recess (3) made on its upper surface (17), **characterized in that** the circular recess (3) has a disc-bearing surface (5) on which a disc is to be laid, and the disc-bearing surface (5) has a recess on its rear side.

2. A disc tray in a disc device according to claim 1, wherein the recess of the disc-bearing surface (5) is a slope (13) inclining down toward the rear end of the disc-bearing surface.

3. A disc tray in a disc device according to claim 1, wherein the recess of the disc-bearing surface (5) has a through-hole (16) therein.
